# EUROPEAN PATENT SPECIFICATION

(11) **EP 2 306 571 B1**
(45) Date of publication and mention of the grant of the patent: **02.10.2013**
(21) Application number: 09812845.7
(22) Date of filing: 27.08.2009
(51) Int. Cl.: H01M 8/04, H01M 8/06, H01M 8/10

(54) **FUEL CELL SYSTEM AND CONTROL METHOD THEREFOR**
BRENNSTOFFZELLENSYSTEM UND STEUERVERFAHREN DAFÜR
SYSTÈME DE PILE À COMBUSTIBLE ET SON PROCÉDÉ DE COMMANDE

(30) Priority: 11.09.2008 JP 2008233202
(43) Date of publication of application: 06.04.2011
(73) Proprietor: Panasonic Corporation, Kadoma-shi Osaka 571-8501 (JP)
(72) Inventor: MITSUI, Masaki, 1-61 Shiromir 2-chome, Chuo-ku, Osaka-shi, Osaka 540-6207 (JP); KIMURA, Tadao, 1-61 Shiromir 2-chome, Chuo-ku, Osaka-shi, Osaka 540-6207 (JP); KOZU, Katsumi, 1-61 Shiromir 2-chome, Chuo-ku, Osaka-shi, Osaka 540-6207 (JP)
(74) Representative: Schwabe - Sandmair - Marx
(86) International application number: PCT/JP2009/004154
(87) International publication number: WO 2010/029696

(56) References cited:
- DE-A1- 10 033 036
- JP-A- 4 115 468
- JP-A- 2000 030 727
- JP-A- 2002 141 094
- JP-A- 2002 280 046
- JP-A- 2002 280 046
- JP-A- 2006 107 786

## Description

### TECHNICAL FIELD

The present invention relates to fuel cell systems, and more particularly to fuel cell systems that optimally control an amount of liquid component in a gas-liquid fluid mixture discharged from fuel cells, and their control methods.

### BACKGROUND ART

Electronic devices are rapidly becoming portable and cordless. In line with this trend, a demand for small and light secondary batteries with high energy density has been increasing. In addition to small batteries for commercial use, development of technology for large secondary batteries for power storage and electric vehicles that require long durability and safety has also been encouraged. Furthermore, fuel cells that can be used continuously for a long duration by supplying fuel is drawing more attention than secondary batteries that require charging.

A fuel cell at least includes a fuel cell stack including cell stack, fuel feeder for supplying fuel to the cell stack, and oxidant feeder for supplying oxidant. In the cell stack, a membrane-electrode assembly of an anode electrode, a cathode electrode, and an electrolytic film between these electrodes, and a separator are laminated. An end plate is disposed at both ends in the laminating direction.

As a typical fuel cell stack of this type, a direct methanol fuel cell (DMFC) has been developed. In DMFC, methanol solution is used as fuel, and oxygen in the air is used as oxidant. As a result, carbon dioxide that is a reaction product, a solution of unreacted methanol that is remaining fuel, and water are discharged. In mobile devices, discharged solution is generally returned to the fuel feeder. On the other hand, nitrogen and unreacted oxygen passing through the cathode electrode are discharged from the cathode electrode, in addition to water and steam that are reactive products. In a fuel cell system, water is needed for reaction at the anode electrode. Therefore, water generated at the cathode electrode is returned to the fuel feeder for reuse. In this way, portability of fuel cell system is improved by using recycled liquid component discharged from the fuel cell stack.

However, if the liquid component is directly returned to the fuel feeder, it becomes difficult to generate power in the fuel cell system at optimal fuel concentration.

A method that is generally adopted is to store the liquid component in a tank after separating gas and liquid components, instead of directly returning the liquid component to the fuel feeder, and supply a required amount of liquid component to the fuel feeder. Accordingly, it becomes important to control an amount of liquid stored in the tank.

One disclosed method controls an amount of collected water by collecting agglutinated steam so as to retain the amount of liquid within a predetermined range in a mixing tank for mixing fuel for the fuel cell unit and water (e.g., Patent Literature 1). This method prevents an overflow of fuel solution supplied to the fuel cell unit from the mixing tank.

However, the fuel cell unit disclosed in Patent Literature 1. requires a water-collecting tank and a mixing tank. This makes it difficult to downsize and reduce weight of the fuel cell system. In addition, in Patent Literature 1, an amount of liquid in the mixing tank is detected by a liquid level sensor, and an amount of water collected to the water-collecting tank is adjusted by controlling output power of a cooling fan and air-feeding pump, so as to retain the amount of liquid within the predetermined range and control the amount of liquid in the mixing tank. However, if a temperature of water collected to the water-collecting tank is high, the amount of collected water may reduce such as by evaporation. This cannot be detected and controlled. Accordingly, a timely water supply may become difficult although the amount of liquid in the mixing tank increases or decreases.

Patent Literature 1 also specifies that steam discharged from the fuel cell is concentrated by a condenser using a cooling fan, and is collected as water (liquid). If the amount of water collected to the water-collecting tank is large, water may overflow from the water-collecting tank. However, no detection means or measures are further disclosed.

Patent Literature 1: Japanese Patent Unexamined Publication No. 2006-107786

### SUMMARY OF THE INVENTION

The present invention offers a fuel cell system for optimally controlling an amount and temperature of liquid component stored in a gas-liquid separator, and its control method.

The fuel cell system of the present invention includes a fuel cell, a pump for supplying gas containing oxygen to the fuel cell, and a gas-liquid separator for separating a liquid component from a gas-liquid fluid mixture discharged at least from a cathode of the fuel cell and storing this liquid component. The fuel cell system also includes a cooler for cooling the liquid component stored in the gas-liquid separator, and a temperature detector for measuring temperature of liquid component stored in the gas-liquid separator. The fuel cell system further includes a liquid level detector for measuring an amount of liquid component stored in the gas-liquid separator, and a controller for controlling a flow rate of gas from the pump and heat discharge by the cooler. The controller controls heat discharge by the cooler and a flow rate of gas supplied from the pump based on an output of the temperature detector and an output of the liquid level detector.

With this structure, an amount of liquid stored in the gas-liquid separator can be controlled using two parameters: The heat discharge by the cooler and the flow rate of gas supplied from the pump, based on a liquid temperature. This achieves the fuel cell system with high control accuracy and high fuel-use efficiency. In addition, since the amount of liquid can be optimally controlled, a fuel cell system with good portability can be realized.

A control method for a fuel cell system of the present invention is a method of controlling the fuel cell system that controls an amount of liquid component stored in a gas-liquid separator. The fuel cell system includes a fuel cell, a pump for supplying gas containing oxygen to the fuel cell, a gas-liquid separator for separating a liquid component from a gas-liquid fluid mixture discharged at least from a cathode side of the fuel cell and storing this liquid component, and a cooler for cooling the liquid stored in the gas-liquid separator. A temperature of liquid component and amount of liquid component are controlled using at least a heat discharge by the cooler or a flow rate of gas supplied from the pump by measuring temperature of liquid component stored in the gas-liquid separator, and measuring an amount of liquid component stored in the gas-liquid separator.

This control method enables an accurate control of the amount of liquid component stored in the gas-liquid separator, based on the liquid temperature, using two parameters: The heat discharge by the cooler and the flow rate of gas supplied from the pump.

The present invention thus offers the fuel cell system with high fuel-use efficiency and good portability by optimally controlling the amount of liquid component stored in the gas-liquid separator, and its control method.

### BRIEF DESCRIPTION OF DRAWINGS

Fig. 1 is a block diagram illustrating a structure of a fuel cell system in accordance with an exemplary embodiment of the present invention.
Fig. 2 is a schematic sectional view illustrating a power-generating operation of a fuel cell in accordance with the exemplary embodiment of the present invention.
Fig. 3A is a perspective view of a gas-liquid separator in accordance with the exemplary embodiment of the present invention.
Fig. 3B is a sectional view taken along line 3B-3B in Fig. 3A.
Fig. 3C is a sectional view taken along line 3C-3C in Fig. 3A.
Fig. 4 is a flow chart briefly illustrating a control method for retaining an amount of liquid stored in the gas-liquid separator of the fuel cell system within a predetermined range in accordance with the exemplary embodiment of the present invention.
Fig. 5 is a flow chart briefly illustrating the control method when an amount of liquid stored in the gas-liquid separator of the fuel cell system is within a range between an upper limit and an uppermost limit in accordance with the exemplary embodiment of the present invention.
Fig. 6 is a flow chart briefly illustrating the control method when quantity of liquid stored in the gas-liquid separator of the fuel cell system is within a range between a lower limit and a lowermost limit in accordance with the exemplary embodiment of the present invention.
Fig. 7 is a flow chart briefly illustrating the control method when liquid stored in the gas-liquid separator of the fuel cell system is above the uppermost limit or below the lowermost limit in accordance with the exemplary embodiment of the present invention.

### DETAILED DESCRIPTION OF PREFERRED EMBODIMENTS

An exemplary embodiment of the present invention is described below, taking a direct methanol fuel cell (DMFC) as an example, with reference to drawings. The present invention is not limited to the description below, and may be practiced or embodied in still other ways without departing from essential character thereof.

### (EXEMPLARY EMBODIMENT)

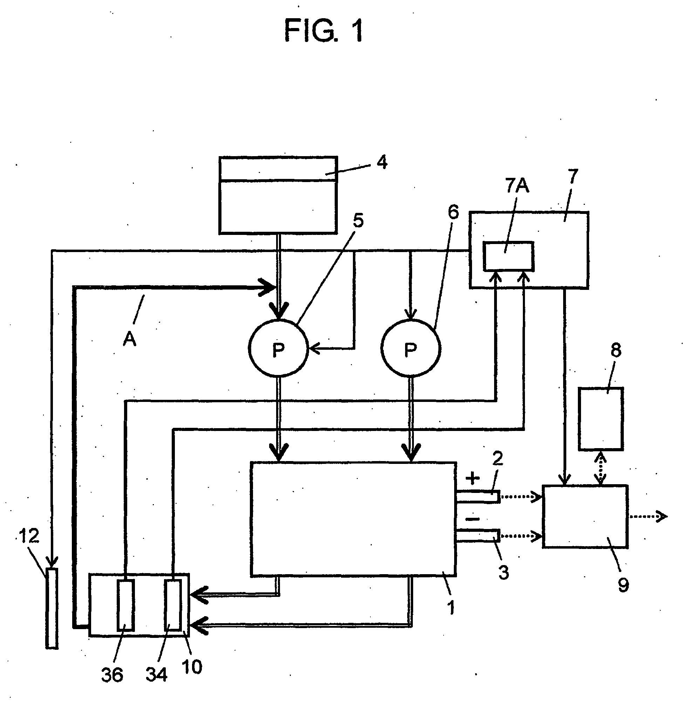

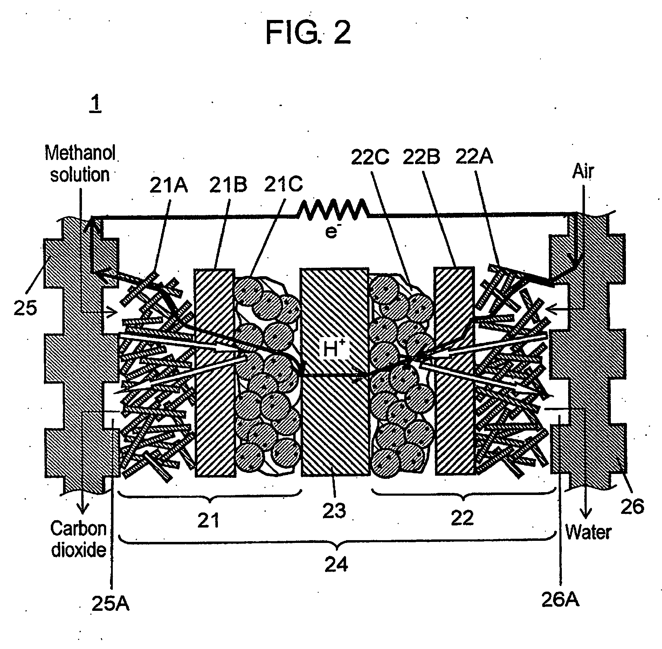

Fig. 1 is a block diagram of a structure of a fuel cell system in the exemplary embodiment of the present invention. Fig. 2 is a sectional view illustrating a power-generating operation of a fuel cell in the exemplary embodiment of the present invention.

An outline of the fuel cell system and the operation of the fuel cell are described below with reference to Figs. 1 and 2.

As shown in Fig. 1, the fuel cell system at least includes fuel cell 1, fuel tank 4, pump 5 for supplying fuel, pump 6 for supplying air, controller 7 equipped with processor 7A, power storage unit 8, DC/DC converter 9, gas-liquid separator 10 equipped with temperature detector 34 and liquid level detector 36, and cooler 12 such as a cooling fan. Fuel cell 1 has a power generator (not illustrated), and power generated is output from positive terminal 2 and negative terminal 3. The power output is input to DC/DC converter 9. At this point, pump 5 supplies fuel such as methanol solution in fuel tank 4 to anode electrode 21 of fuel cell 1. Pump 6 supplies gas such as air, which is oxidant, to cathode electrode 22 of fuel cell 1. Controller 7 controls driving of pump 5 for supplying fuel and pump 6 for supplying gas such as air. Controller 7 also controls DC/DC converter 9 so as to control an output to external equipment (not illustrated) and charge and discharge to power storage unit 8. Fuel tank 4, pump 5, and controller 7 configure a fuel feeder for supplying fuel to anode electrode 21 in fuel cell 1. On the other hand, pump 6 and controller 7 configure an oxidant feeder for supplying gas such as oxidant to cathode electrode 22 in fuel cell 1. Gas-liquid separator 10 separates a liquid component (mainly water) from gas-liquid fluid mixture discharged from anode electrode 21 and cathode electrode 22, and supplies this liquid component to pump 5 together with fuel supplied from fuel tank 4.

The structure and operation of fuel cell 1 are briefly described below. As shown in Fig. 2, fuel cell 1 includes membrane-electrode assembly (MEA) 24, which is an electromotive unit, and end plate 25 at the anode side and end plate 26 at the cathode side that sandwich MEA 24. If the fuel cell is configured by laminating multiple layers of MEA 24, a separator is provided between MEAs 24 so that multiple MEAs 24 are laminated with the separator in between. End plate 25 at the anode side and end plate 26 at the cathode side sandwich both ends of MEA 24 in the laminating direction.

MEA 24 is configured by laminating anode electrode 21, cathode electrode 22, and electrolytic film 23 between anode electrode 21 and cathode electrode 22. Anode electrode 21 is configured by laminating diffusion layer 21A, microporous layer (MPL) 21B, and catalyst layer 21C from endplate 25 at the anode side. In the same way, cathode electrode 22 is configured by laminating diffusion layer 22A, microporous layer (MPL) 22B, and catalyst layer 22C from end plate 26 at the cathode side. Furthermore, positive terminal 2 is electrically coupled to cathode electrode 22, and negative terminal 3 is electrically coupled to anode electrode 21, respectively.

Diffusion layers 21A and 22A are typically made of carbon paper, carbon felt, or carbon cloth. MPL 21B and MPL 22B are typically configured with polytetrafluoroethylene or copolymer of tetrafluoroethylene and hexafluoropropylene and carbon. Catalyst layers 21C and 22C are formed by high dispersion of catalyst appropriate for each electrode reaction, such as platinum and ruthenium, on the carbon surface, and binding this catalytic mixture with a binder. Electrolytic film 23 is an ion exchange film transmitting hydrogen ions, such as copolymer of perfluorosulfonic acid and tetrafluoroethylene. End plate 25 at the anode side, end plate 26 at the cathode side, and the separator are typically made of a carbon material or stainless steel. Fuel passage 25A for passing fuel is provided on anode electrode 21, and gas passage 26A for passing gas such as oxidant is provided on cathode electrode 22, typically by creating a groove.

The operation of fuel cell 1 as configured above is described next. As shown in Figs. 1 and 2, pump 5 supplies water solution containing methanol that is fuel to anode electrode 21. Pump 6 supplies pressurized gas such as air, which is oxidant, to cathode electrode 22. Methanol solution supplied to anode electrode 21, methanol that comes from this solution, and steam spread on the entire face of MPL 21B through diffusion layer 21A, passes through MPL 21B, and reaches catalyst layer 21C. In the same way, oxygen in the air supplied to cathode electrode 22 is diffused through the entire face of MPL 22B on diffusion layer 22A, passes through MPL 22B, and reaches catalyst layer 22C. Methanol reaching catalyst layer 21C reacts as shown in Formula (1), and oxygen reaching catalyst layer 22C reacts as shown in Formula (2).

CH₃OH + H₂O → CO₂ + 6H⁺ + 6e⁻ (1)

3/2O₂ 6H⁺ + 6e⁻ → 3H₂O (2)

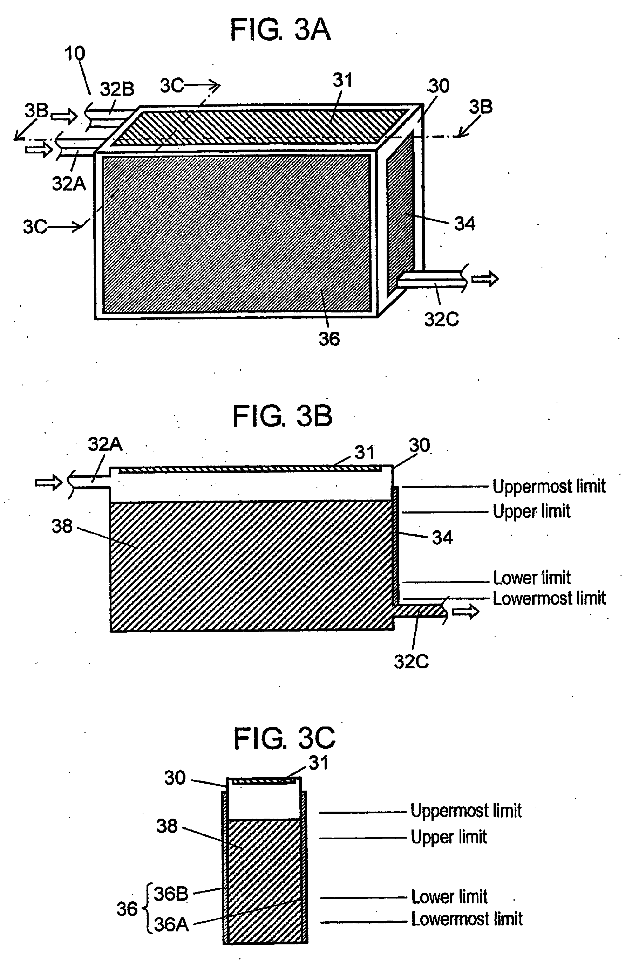

As a result, power is generated. At the same time, carbon dioxide is generated at the side of anode electrode 21, and gas-liquid fluid mixture, such as water, is generated at the side of cathode electrode 22 as reaction products, respectively. Each of reaction products is supplied to gas-liquid separator 10 shown in Fig. 1. Then, as detailed below with reference to Figs. 3A to 3C, carbon dioxide generated in anode electrode 21 is emitted outside of the fuel cell system via gas-liquid separation film 31 of gas-liquid separator 10. At the same time, gas such as nitrogen that does not react in cathode electrode 22 and unreacted oxygen are emitted outside of the fuel cell system. Since all of methanol in the methanol solution does not contribute to reaction at the side of anode electrode 21, the methanol solution discharged is returned to pump 5 via gas-liquid separator 10, as shown by arrow A in Fig. 1. In the same way, to supply water consumed in reaction in anode electrode 21, water generated in cathode electrode 22 is also returned to pump 5 via gas-liquid separator 10, so as to supply water to the side of anode electrode 21.

As described above, the liquid component, such as water, discharged from fuel cell 1 is circulated via gas-liquid separator 10 so that concentration of methanol solution, which is fuel, can be adjusted. As a result, the need for supplying water from outside can be eliminated, and the need for discharging (disposing of) water, which is a reaction product, outside can be eliminated. Accordingly, the present invention improves portability of fuel cell system, and the use efficiency of fuel.

To efficiently circulate liquid such as water via aforementioned gas-liquid separator 10, it is important to retain an output of liquid collected to gas-liquid separator 10 within a predetermined range so as to supply water to pump 5 without causing overflow or dry-up liquid. This is because if the amount of liquid, which is liquid quantity or stored quantity, becomes excessive, the liquid will leak from gas-liquid separator 10. If the stored liquid quantity becomes scarce, the concentration of fuel supplied to the anode electrode becomes unadjustable.

A structure of gas-liquid separator 10 and a control method of retaining the amount of liquid collected within a predetermined range are detailed below.

The structure of gas-liquid separator in this exemplary embodiment is detailed below with reference to Figs. 3A to 3C.

Fig. 3A is a perspective view of the gas-liquid separator in the exemplary embodiment of the present invention. Fig. 3B is a sectional view taken along line 3B-3B in Fig. 3A. Fig. 3C is a sectional view taken along line 3C-3C in Fig. 3A.

As shown in Fig. 3A, gas-liquid separator 10 includes tank 30, gas-liquid separation film 31, incoming pipes 32A and 32B, discharge pipe 32C, and temperature detector 34 and liquid level detector 36 for measuring temperature (liquid temperature) and an amount of the stored liquid component. Incoming pipes 32A and 32B are connected at an upper part and discharge pipe 32C is connected at a lower part of tank 30, respectively. Water and steam that are reaction products generated in cathode electrode 22 and gas passing through cathode electrode 22 flow into gas-liquid separator 10 through incoming pipe 32A. On the other hand, carbon dioxide that is a reaction product generated in anode electrode 21 and water containing unreacted methanol, which is remaining fuel, flow into gas-liquid separator 10 through incoming pipe 32B.

Gas-liquid separation film 31 provided on the top face of tank 30 separates a gas component, such as carbon dioxide and steam, and the liquid component, such as water, are separated, and excess gas component is emitted outside in the gas state. At the same time, liquid 38 is stored in tank 30. Liquid 38 stored in tank 30 is supplied to an inlet of pump 5 via a valve (not illustrate) provided on discharge pipe 32C.

Controller 7 controls a liquid supply amount by opening and closing this valve, so as to adjust the concentration of methanol solution, which is fuel supplied to the anode electrode. In addition, processor 7A in controller 7 executes arithmetic processing to retain the amount of liquid in tank 30 within a predetermined range based on information on temperature and amount of liquid detected by temperature detector 34 and liquid level detector 36.

Gas-liquid separation film 31 is typically configured with a porous sheet of fluorine resin, such as polytetrafluoroethylene (PTFE), copolymer of tetrafluoroethylene and perfluoroalkyl vinyl ether (PFA), or copolymer of tetrafluoroethylene and hexafluoropropylene (FEP). A cloth, paper, or nonwoven fabric sheet made of carbon fiber coated with fluorine resin may also be used. Tank 30 is configured with insulating material, such as resin and ceramic.

Temperature detector 34 is typically configured with a thermistor, and is disposed at a position where at least stored liquid 38 exists. Temperature detector 34 may be provided on the outer side face of tank 30, but is preferably disposed inside tank 30 at a position directly contacting liquid 38. This improves detection accuracy of the temperature of liquid 38.

Liquid level detector 36 is configured with, as shown in Fig. 3C, a pair of electrodes 36A and 36B formed on opposing side faces of tank 30. Liquid level detector 36 detects an amount of liquid 38 in tank 30 by a change in electric capacitance (electrostatic capacity) between electrode 36A and electrode 36B. In other words, processor 7A calculates and detects the amount of liquid from changes in electric capacitances of the gas component and liquid component present between opposing electrodes 36A and 36B, which is detected in parallel. Since tank 30 is a part of electric capacitance connected in series between the electrodes, tank 30 is preferably made of a material with small dielectric constant in order to improve the detection accuracy.

The amount of liquid 38 in tank 30 is controlled, as shown in Figs. 3B and 3C, within a range between a predetermined upper limit and lower limit. The amount of liquid is controlled by controlling heat discharge by means of wind volume of a cooling fan in the cooler and a gas supply amount by means of a flow rate of gas supplied from the pump, based on the liquid temperature. More specifically, evaporation of liquid inside the tank is adjusted by controlling heat discharge by means of the cooler. In addition, an amount of gas-liquid separated fluid discharged from the cathode electrode is adjusted by controlling a gas supply amount based on gas flow rate.

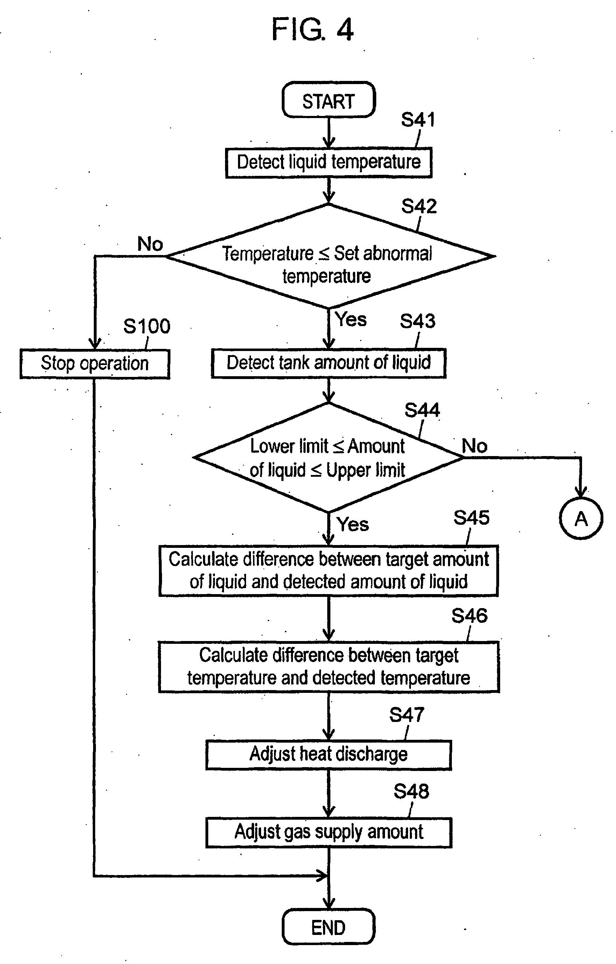

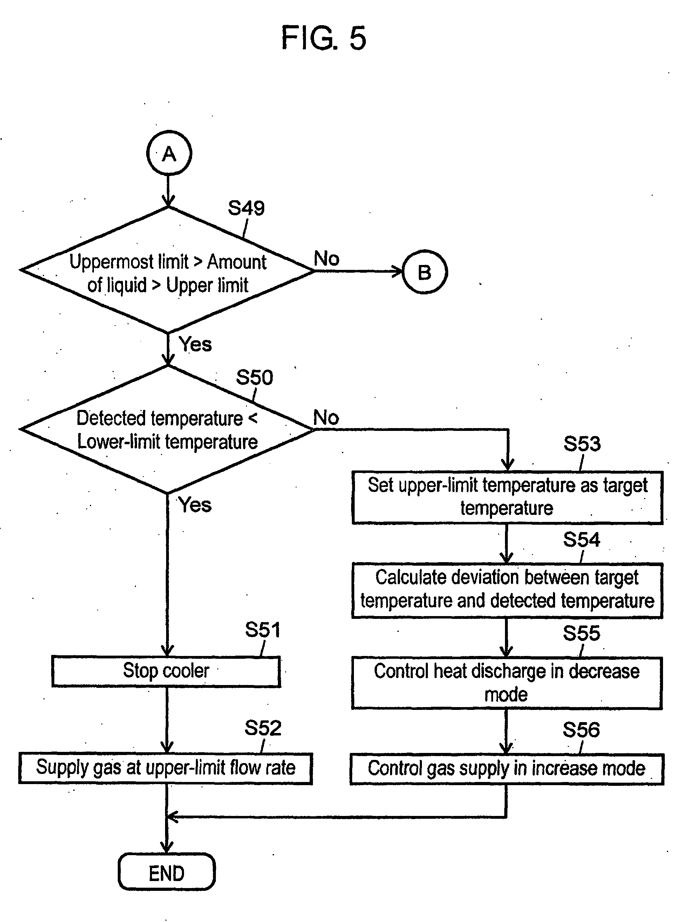

The fuel cell system in the exemplary embodiment is configured as described above. Next is described a control method for the fuel cell system in the exemplary embodiment of the present invention, and more particularly a control method of retaining the amount of liquid stored in the gas-liquid separator within a predetermined range, with reference to Figs. 4 to 7. In particular, Fig. 4 shows the control method in a normal state of the fuel cell system. Figs. 5 to 7 show the control method in an emergency state of the fuel cell system.

Fig. 4 is a flow chart briefly illustrating the control method for retaining an amount of liquid stored in the gas-liquid separator of the fuel cell system within a predetermined range in the exemplary embodiment of the present invention.

As shown in Fig. 4, the temperature detector measures temperature of liquid in the tank (Step S41).

Next, whether or not measured temperature (detected temperature) is less than a set abnormal temperature of the fuel cell used is determined (Step S42). If the temperature is above the set abnormal temperature (No in Step S42), the operation of fuel cell system is stopped (Step S100). For example, in case of the fuel cell of DMFC, its operating temperature is generally 55 °C to 80 °C, and thus the set abnormal temperature is, for example, 85 °C.

Next, if the measured temperature is not greater than the set abnormal temperature (Yes in Step S42), the liquid level detector measures an amount of liquid (fluid volume) in the tank (Step S43).

Next, whether or not the measured amount of liquid is within a range between a lower limit and upper limit is determined (Step S44). If the amount of liquid is below the lower limit or above the upper limit, Step A shown in Fig. 5, which is emergency processing, is executed (No in Step S44). In this case, the lower limit is set to, for example, 30% of the uppermost limit in the tank, and the upper limit is set to 70% of the uppermost limit. The lower limit and the upper limit are not limited to this range. They are set taking into account factors such as control accuracy, control time, and liquid increase/decrease rate.

Next, if the measured amount of liquid is within the range between the lower limit and the upper limit (Yes in Step S44), the controller calculates a deviation between a target amount of liquid and detected amount of liquid in the tank (Step S45). At the same time, the controller calculates a deviation between the target temperature (e.g., 60 °C) and detected temperature of liquid in the tank (Step S46). The target amount of liquid may be set around the middle, for example, of lower limit and upper limit of liquid stored in the tank in order to take a large margin in the control range. The target temperature is typically set to 60 °C taking into account evaporation of liquid in the tank and operating temperature of fuel cell.

Based on deviations calculated in Step S45 and Step S46, heat discharge by cooler (Step S47) and gas supply amount (Step S48) are adjusted.

An amount and temperature of liquid stored in the tank are controlled in accordance with the above steps so as to supply fuel with optimal concentration to the anode electrode of the fuel cell system. An amount and temperature of liquid in the tank may be controlled at a predetermined time interval or continuously. However, to suppress power consumption by control, it is preferable to control at short intervals if ambient temperature and humidity around the fuel cell system greatly change, and at long intervals if changes are small.

The above steps prevent overflow and leakage of liquid from the tank where the liquid component of the gas-liquid separated fluid discharged from the fuel cell is stored. Since the liquid in the tank will not run dry, the fuel with optimal concentration can be supplied to the anode electrode.

The above control method for the fuel cell system is preferable in the normal state. However, in case of emergency, such as No in Step S44 in Fig. 4, a significant effect can be demonstrated by controlling the operation in a way different from the above.

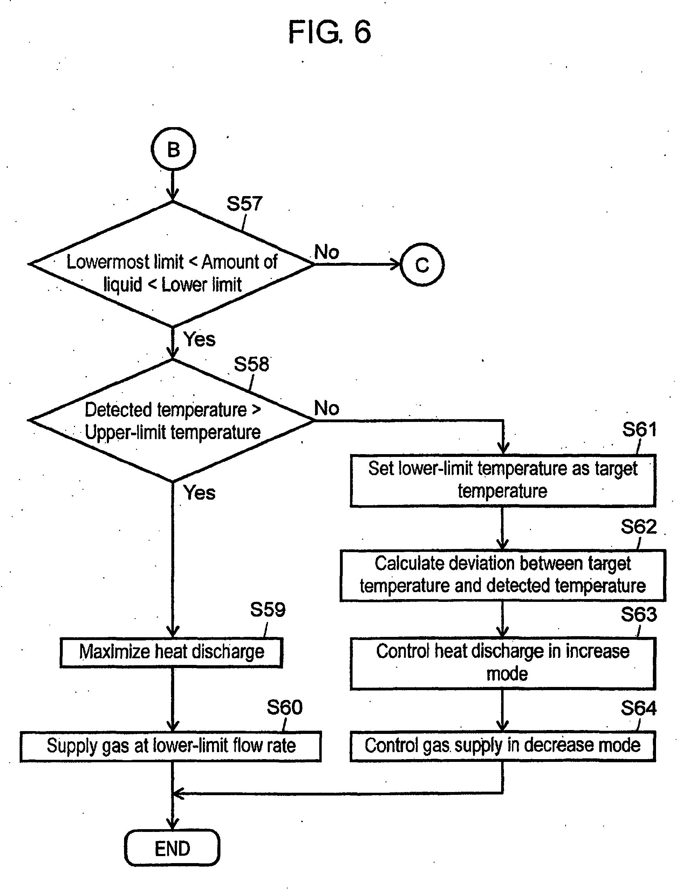

The control method for the fuel cell system in emergency occasions is detailed below with reference to Figs. 5 and 6.

Fig. 5 is a flow chart briefly illustrating the control method in case when an amount of liquid stored in the gas-liquid separator of the fuel cell system is within a range between the upper limit and the uppermost limit in the exemplary embodiment of the present invention. Fig. 6 is a flow chart briefly illustrating the control method in case when an amount of liquid stored in the gas-liquid separator of the fuel cell system is within a range between the lower limit and the lowermost limit in the exemplary embodiment of the present invention.

First, as shown in Fig. 5, when an amount of liquid in the tank is out of the range between the lower limit and the upper limit in Step S44 in Fig. 4, whether or not the amount of liquid in the tank is within a range between the upper limit and the uppermost limit is further determined as processing of Step A (Step S49). If the amount is above the uppermost limit or below the lowermost limit, Step B, which is emergency processing described in Fig. 6, is executed (No in Step S49). Here, the uppermost limit is preferably set to the same level as the bottom face of incoming pipe 32A when the fuel cell system is ideally installed on a flat surface. However, in general, taking into account tilting of tank and control delay or overshoot in case of emergency, the uppermost limit is preferably set below the bottom face of incoming pipe 32A in order to avoid liquid overflow.

Next, if the amount of liquid in the tank is within the range between the upper limit and the uppermost limit (Yes in Step S49), temperature detector 34 measures temperature of liquid in the tank, and determines whether or not detected temperature of liquid in the tank is below a predetermined lower-limit temperature (Step S50). Here, the lower-limit temperature is set to, for example, 55 °C taking into account power generation efficiency of the fuel cell system.

Next, if the detected temperature of liquid in the tank is below the lower-limit temperature (Yes in Step S50), driving of cooler 12, such as a cooling fan, for cooling the tank is stopped (Step S51). At the same time, gas is supplied to cathode electrode 22 of the fuel cell at the upper-limit flow rate from pump 6 for supplying gas that becomes oxidant, such as air (Step S52). In this case, the upper-limit flow rate is typically the maximum supply amount within a control range of gas flow rate supplied by the pump.

On the other hand, if the detected temperature is not less than the lower-limit temperature (No in Step S50), the target temperature of liquid is set to the upper-limit temperature (e.g., 80°C) (Step S53). Then, the controller calculates a deviation between the target temperature (upper-limit temperature) and measured detected liquid temperature (Step S54).

Next, based on the deviation calculated in Step S54, cooler 12 for cooling tank 30 is controlled in a decrease mode for heat discharge (Step S55). At the same time, an amount of gas supplied to cathode electrode 22 of the fuel cell is controlled in an increase mode (Step S56). More specifically, a wind volume of the cooling fan of cooler 12 for cooling tank 30 is reduced to decrease heat discharge. At the same time, a gas supply amount to cathode electrode 22 of the fuel cell is increased. In the decrease mode, heat discharge is controlled within a range below the initial heat discharge set at an initial use of the fuel cell system and the minimum heat discharge by the cooler. For example, the PID control is applied to adjust decrease of heat discharge within the control range based on the deviation with the target temperature. In the increase mode for gas supply, a supply amount is adjusted within a range above the initial supply amount set at the initial use of the fuel cell system and the maximum supply amount from the pump. In addition, the gas supply is adjusted within a range that no significant temperature drop occurs due to increased gas supply.

The above control is effective when the liquid temperature is low in the state that more liquid than necessary is stored in the tank. In other words, the above control is effective when there is a high possibility of overflow or leakage of liquid from the tank by gas-liquid separated fluid discharged from the fuel cell due to small liquid evaporation. More specifically, an amount of liquid stored in the tank is reduced by stopping the operation of cooling fan of the cooler or operating the cooling fan in the decrease mode so as to enhance liquid evaporation. In addition, an amount of gas-liquid separated fluid discharged from the cathode electrode can be reduced by controlling a supply amount of gas, such as air, in the increase mode, so as to supply gas close to the upper limit.

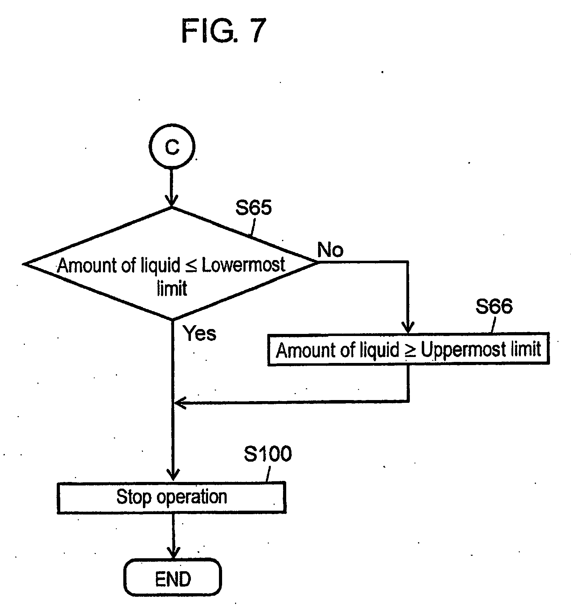

As shown in Fig. 6, if the amount of liquid in the tank is out of the range from the upper limit to the uppermost limit in Step S49 in Fig. 5, whether or not the amount of liquid is in a range within the lowermost limit to lowermost is further determined as processing of Step B (Step S57). If the amount of liquid is below the lowermost limit or above the uppermost limit, an emergency process, which is processing of Step C, illustrated in Fig. 7 is executed (No in Step S57). In this case, as shown in Fig. 3B, the lowermost limit is preferably set to the same level as the top face of discharge pipe 32C when the fuel cell system is ideally installed on a flat surface. However, taking into account tilting of the tank and control delay or undershoot in case of emergency, the lowermost limit is preferably set above the top face of discharge pipe 32C in order to avoid insufficient supply of liquid.

Next, if the amount of liquid is within a range between the lowermost limit and the lower limit (Yes in Step S57), the temperature detector measures the liquid temperature in the tank to determine whether or not the detected temperature of tank liquid exceeds a predetermined upper-limit temperature (Step S58). The upper-limit temperature is set to, for example, 80 °C, taking into account evaporation of the tank liquid.

Next, if the liquid temperature exceeds the upper-limit temperature (Yes in Step S58), air volume of cooling fan, which is a cooler for cooling the tank, is typically set to the maximum in order to maximize heat discharge (Step S59). At the same time, gas from the pump for supplying gas that becomes oxidant, such as air, to the cathode of fuel cell is supplied at a lower-limit flow rate (Step S60). The lower-limit flow rate is, for example, the minimum supply amount within a control range of flow rate of gas supplied by the pump.

On the other hand, if the liquid temperature is below the upper-limit temperature (No in Step S58), the target liquid temperature is set to the lower-limit temperature (e.g., 55 °C) (Step S61). Then, the controller calculates a deviation between the target temperature (lower-limit temperature) and the measured detected temperature of liquid (Step S62).

Next, based on the deviation calculated in Step S62, heat discharge by the cooler for cooling the tank is controlled in an increase mode (Step S63), and gas supplied to the cathode of fuel cell is controlled in a decrease mode (Step S64). More specifically, a wind volume of the cooling fan of the cooler for cooling the tank is increased so as to increase heat discharge. At the same time, an amount of gas supplied to the cathode of the fuel cell is reduced. In the increase mode, heat discharge is controlled within a range above the initial heat discharge set at an initial use of the fuel cell system and less than the maximum heat discharge by the cooler. For example, the PID control is applied to adjust increase of heat discharge within a control range based on the deviation with the target temperature. In the decrease mode for gas supply, a supply amount is adjusted within a range below the initial supply amount set at the initial use of the fuel cell system and the minimum supply amount from the pump. In addition, a gas supply is adjusted within a range that does not cause a significant temperature rise due to decreased gas supply.

The above control is effective when there is a high possibility of exhaustion of liquid even if the gas-liquid separated fluid discharged from the fuel cell is supplied to the tank, due to a high liquid temperature, i.e., a high liquid evaporation, in a state that the liquid in the tank is almost exhausted. In other words, liquid evaporation is suppressed so as to increase an amount of liquid stored in the tank by maximizing heat discharge by the cooler or operating the cooler in the increase mode. In addition, an amount of gas-liquid separated fluid, such as water, discharged from the cathode electrode can be increased by controlling the supply amount of gas, such as air, in the decrease mode so as to supply gas at a flow rate close to the lower limit.

The control illustrated in Fig. 7 is executed when the amount of liquid in the tank shown in Figs. 4 to 6 is out of a predetermined range at the time of starting control.

Fig. 7 is a flow chart briefly illustrating a control method when an amount of liquid stored in the gas-liquid separator of the fuel cell system is above the uppermost limit or below the lowermost limit in this exemplary embodiment of the present invention.

First, whether or not the amount of liquid in the tank is below the lowermost limit is determined (Step S65).

If the amount of liquid is below the lowermost limit (Yes in Step S65), the operation of fuel cell system is stopped (Step S100).

If the amount of liquid is above the lowermost limit (No in Step S65), the amount of liquid in the tank is determined to be the amount of uppermost limit (Step S66), and the operation of the fuel cell system is also stopped (S100).

As detailed above, the amount of liquid in the tank of the gas-liquid separator can be accurately controlled by the use of two parameters: A heat discharge by wind volume of the cooler, such as a cooling fan, and a supply amount of gas (gas flow rate) by the pump for supplying gas, such as air, based on the detected liquid temperature. Also in an emergency occasion, the amount of liquid can be controlled to within a use range in a short period. Accordingly, the fuel cell system with high reliability and good portability can be achieved.

The exemplary embodiment refers to an example of DMFC. However, the present invention is not limited to DMFC. The structure of the present invention is applicable to any fuel cell using a power-generating element same as a cell stack. For example, the present invention is also applicable to a so-called polymer solid electrolyte fuel cell and methanol reforming fuel cell using hydrogen as fuel.

Still more, the exemplary embodiment refers to an example of controlling an amount of tank liquid basically when the fuel cell system is installed on a flat surface. However, the present invention is not limited to the flat surface. For example, a tilt sensor may be built in the fuel cell system, and the amount of liquid is corrected by a tank tilting level detected by this tilt sensor to execute the same processes. This remarkably reduces limitations in use areas typically for mobile devices, increasing a range of application.

Still more, the exemplary embodiment refers to a capacitance sensor that detects an amount of liquid by electrostatic capacitance as the liquid level detector. However, the present invention is not limited to the capacitance sensor. For example, a float-type sensor may be used for detecting the amount of liquid.

Still more, the exemplary embodiment refers to an example of providing electrodes on the entire opposing side faces of the tank as the liquid level detector. However, the present is not limited to this structure. For example, electrodes that are divided to multiple numbers, such as dual partitioning, may be formed, and they may be used as a detector for both amount of liquid and tilting level based on measured electrostatic capacitance between opposing electrodes. More specifically, if liquid level detector 36 is divided to left and right in Fig. 3A, a deviation occurs between electrostatic capacitances of the left and right liquid level detectors if the tank is tilted in the left and right directions in the drawing. The tilting level can thus be detected from this deviation. The same structure of forming electrodes on different side faces is applicable to detection of tilting of the tank in the back and forth directions in the drawing.

Furthermore, the exemplary embodiment refers to the cooling fan as the cooler. However, the present invention is not limited to the cooling fan. For example, a Peltier device may be used as the cooler. To further improve the heat discharge efficiency or cooling efficiency, a cooling fin may be provided on the side face of tank.

### INDUSTRIAL APPLICABILITY

The present invention offers a highly-reliable and safe fuel cell system with long service life, and its control method. Accordingly, the present invention is effectively applicable as a power source for electronic equipment that particularly requires compactness and mobile feature.

### REFERENCE MARKS IN THE DRAWINGS

- 1: Fuel cell
- 2: Positive terminal
- 3: Negative terminal
- 4: Fuel tank
- 5, 6: Pump
- 7: Controller
- 7A: Processor
- 8: Power storage unit
- 9: DC/DC converter
- 10: Gas-liquid separator
- 12: Cooler
- 21: Anode electrode
- 21, 22a: Diffusion layer
- 21B, 22B: Microporous layer (MPL)
- 21C, 22C: Catalyst layer
- 22: Cathode electrode
- 23: Electrolyte film
- 24: Membrane-electrode assembly (MEA)
- 25: End plate at anode side
- 25a: Fuel passage
- 26: End plate at cathode side
- 26: Gas passage
- 30: Tank
- 31: Gas-liquid separation film
- 32A, 32B: In-coming pipe
- 32C: Discharge pipe
- 34: Temperature detector
- 36: Liquid level detector
- 36A, 36B: Electrode
- 38: Liquid

## Claims

1. A fuel cell system comprising:
a fuel cell (1);
a pump (6) for supplying gas including oxygen to the fuel cell (1);
a gas-liquid separator (10) for separating a liquid component from a gas-liquid fluid mixture discharged at least from a cathode side (22) of the fuel cell (1), and storing the liquid component;
a cooler (12) for cooling the liquid component stored in the gas-liquid separator (10);
a temperature detector (34) for measuring a temperature of the liquid component stored in the gas-liquid separator (10);
a liquid level detector (36) for measuring an amount of the liquid component stored in the gas-liquid separator (10); and
a controller (7) for controlling a flow rate of the gas from the pump (6), and controlling heat discharge by the cooler (12),
wherein
the controller (7) controls the heat discharge by the cooler (12) and the flow rate of the gas supplied from the pump (6) based on an output of the temperature detector (34) and an output of the liquid level detector (36).

2. The fuel cell system of claim 1,
wherein
the controller (7):
stops the cooler (12), and controls the pump (6) to supply the gas at an upper-limit flow rate when the amount of the liquid component stored in the gas-liquid separator (10) is greater than a predetermined upper-limit amount and a detected temperature of the liquid component is lower than a predetermined lower-limit temperature; and
controls heat discharge by the cooler (12) in a decrease mode and a flow rate of the gas supplied from the pump (6) in an increase mode when the amount of the liquid component stored in the gas-liquid separator (10) is greater than the predetermined upper-limit amount and the detected temperature of the liquid component is higher than the predetermined lower-limit temperature, the predetermined upper-limit temperature being set as a target temperature of the liquid component, a deviation between the target temperature and the detected temperature being calculated, the control is based on the calculated deviation.

3. The fuel cell system of claim 1,
wherein
the controller (7):
operates the cooler (12) to gain maximum heat discharge, and controls the pump (6) to supply the gas at a lower-limit flow rate when the amount of the liquid component stored in the gas-liquid separator (10) is less than a predetermined lower-limit amount and a detected temperature of the liquid component is higher than a predetermined upper-limit temperature; and
controls heat discharge by the cooler (12) in an increase mode and controls a flow rate of the gas supplied from the pump (6) in a decrease mode when the amount of the liquid component stored in the gas-liquid separator (10) is less than the predetermined lower-limit amount and the detected temperature of the liquid component is lower than the predetermined upper-limit temperature, the predetermined lower-limit temperature being set as a target temperature of the liquid component, a deviation between the target temperature and the detected temperature being calculated, the control is based on the calculated deviation.

4. A control method for a fuel cell system, the fuel cell system comprising a fuel cell (1), a pump (6) for supplying gas including oxygen to the fuel cell (1), a gas-liquid separator (10) for separating a liquid component from a gas-liquid fluid mixture discharged at least from a cathode side (22) of the fuel cell (1), and a cooler (12) for cooling the liquid component stored in the gas-liquid separator (10), the fuel cell system controlling an amount of the liquid component stored in the gas-liquid separator (10); the control method comprising:
measuring a temperature of the liquid component stored in the gas-liquid separator (10);
measuring the amount of the liquid component stored in the gas-liquid separator (10); and
controlling heat discharge by the cooler (12) and a flow rate of the gas supplied from the pump (6) based on the temperature of the liquid component and the amount of the liquid component.

5. The control method for the fuel cell system of claim 4, further comprising:
stopping the cooler (12) and controlling the pump (6) to supply the gas at an upper-limit flow rate when the amount of the liquid component stored in the gas-liquid separator (10) is greater than a predetermined upper-limit amount and a detected temperature of the liquid component is lower than a predetermined lower-limit temperature; and
controlling heat discharge by the cooler (12) in a decrease mode, and controlling a flow rate of the gas supplied from the pump (6) in an increase mode when the amount of the liquid component stored in the gas-liquid separator (10) is greater than the predetermined upper-limit amount and the detected temperature of the liquid component is higher than the predetermined lower-limit temperature, the predetermined upper-limit temperature being set as a target temperature of the liquid component, a deviation between the target temperature and the detected temperature being calculated, the control is based on the calculated deviation.

6. The control method for the fuel cell system of claim 4, further comprising:
operating the cooler (12) to gain maximum heat discharge, and supplying the gas from the pump (6) at a lower-limit flow rate when the amount of the liquid component stored in the gas-liquid separator (10) is less than a predetermined lower-limit amount and the detected temperature of the liquid component is higher than a predetermined upper-limit temperature; and
controlling heat discharge by the cooler (12) in an increase mode and controlling an amount of the gas supplied from the pump (6) in a decrease mode when the amount of the liquid component stored in the gas-liquid separator is less than the predetermined lower-limit amount and the detected temperature of the liquid component is less than a predetermined upper-limit temperature, a predetermined lower-limit temperature being set as a target temperature of the liquid component, a deviation between the target temperature and the detected temperature being calculated so as to control based on the calculated deviation.

## Patentansprüche

1. Ein Brennstoffzellensystem, aufweisend:
eine Brennstoffzelle (1);
eine Pumpe (6) zum Liefern eines Gases, das Sauerstoff enthält, an die Brennstoffzelle (1);
einen Gas-Flüssigkeits-Separator (10) zum Separieren einer flüssigen Komponente aus einer fluiden Gas-Flüssigkeits-Mischung, die zumindest von einer Kathodenseite (22) der Brennstoffzelle (1) ausgestoßen wird, und zum Speichern der flüssigen Komponente;
einen Kühler (12) zum Kühlen der flüssigen Komponente, die in dem Gas-Flüssigkeits-Separator (10) gespeichert ist;
einen Temperaturdetektor (34) zum Messen einer Temperatur der flüssigen Komponente, die in dem Gas-Flüssigkeits-Separator (10) gespeichert ist;
einen Flüssigkeitsstandsdetektor (36) zum Messen einer Menge der flüssigen Komponente, die in dem Gas-Flüssigkeits-Separator (10) gespeichert ist, und
eine Steuereinrichtung (7) zum Steuern einer Flussrate des Gases von der Pumpe (6), und zum Steuern der Wärmeabgabe durch den Kühler (12),
wobei
die Steuereinrichtung (7) die Wärmeabgabe durch den Kühler (12) und die Flussrate des von der Pumpe (6) gelieferten Gases basierend auf einer Ausgabe des Temperaturdetektors (34) und einer Ausgabe des Flüssigkeitsstandsdetektors (36) steuert.

2. Das Brennstoffzellensystem des Anspruchs 1,
wobei
die Steuereinrichtung (7):
den Kühler (12) stoppt und die Pumpe (6) steuert, um das Gas an einer Obergrenzen-Flussrate zu liefern, wenn die Menge der flüssigen Komponente, die in dem Gas-Flüssigkeits-Separator (10) gespeichert ist, größer ist als eine vorgegebene Obergrenzen-Menge und eine detektierte Temperatur der flüssigen Komponente niedriger ist als eine vorgegebene Untergrenzen-Temperatur; und
die Wärmeabgabe durch den Kühler (12) in einem Verringerungsmodus und eine Flussrate des Gases, das von der Pumpe (6) geliefert wird, in einem Erhöhungsmodus steuert, wenn die Menge der flüssigen Komponente, die in dem Gas-Flüssigkeits-Separator (10) gespeichert ist, größer ist als die vorgegebene Obergrenzen-Menge und die detektierte Temperatur der flüssigen Komponente höher ist als die vorgegebene Untergrenzen-Temperatur, wobei die vorgegebene Obergrenzen-Temperatur als eine Zieltemperatur der flüssigen Komponente festgelegt wird, eine Abweichung zwischen der Zieltemperatur und der detektierten Temperatur berechnet wird und die Steuerung auf der berechneten Abweichung basiert.

3. Das Brennstoffzellensystem des Anspruchs 1,
wobei
die Steuereinrichtung (7):
den Kühler (12) betreibt, um eine maximale Wärmeabgabe zu erreichen, und die Pumpe (6) steuert, um das Gas an einer Untergrenzen-Flussrate zu liefern, wenn die Menge der flüssigen Komponente, die in dem Gas-Flüssigkeits-Separator (10) gespeichert ist, geringer ist als eine vorgegebene Untergrenzen-Menge und eine detektierte Temperatur der flüssigen Komponente höher ist als eine vorgegebene Obergrenzen-Temperatur; und
die Wärmeabgabe durch den Kühler (12) in einem Erhöhungsmodus steuert und eine Flussrate des Gases, das von der Pumpe (6) geliefert wird, in einem Verringerungsmodus steuert, wenn die Menge der flüssigen Komponente, die in dem Gas-Flüssigkeits-Separator (10) gespeichert ist, geringer ist als die vorgegebene Untergrenzen-Menge und die detektierte Temperatur der flüssigen Komponente niedriger ist als die vorgegebene Obergrenzen-Temperatur, wobei die vorgegebene Untergrenzen-Temperatur als eine Zieltemperatur der flüssigen Komponente festgelegt wird, eine Abweichung zwischen der Zieltemperatur und der detektierten Temperatur berechnet wird und die Steuerung auf der berechneten Abweichung basiert.

4. Ein Steuerverfahren für ein Brennstoffzellensystem, wobei das Brennstoffzellensystem eine Brennstoffzelle (1), eine Pumpe (6) zum Liefern eines Gases, das Sauerstoff enthält, an die Brennstoffzelle (1), einen Gas-Flüssigkeits-Separator (10) zum Separieren einer flüssigen Komponente aus einer fluiden Gas-Flüssigkeits-Mischung, die zumindest von einer Kathodenseite (22) der Brennstoffzelle (1) ausgestoßen wird, und einen Kühler (12) zum Kühlen der flüssigen Komponente, die in dem Gas-Flüssigkeits-Separator (10) gespeichert ist, enthält und wobei das Brennstoffzellensystem eine Menge der flüssigen Komponente, die in dem Gas-Flüssigkeits-Separator (10) gespeichert ist, steuert; das Steuerverfahren aufweisend:
das Messen einer Temperatur der flüssigen Komponente, die in dem Gas-Flüssigkeits-Separator (10) gespeichert ist;
das Messen der Menge der flüssigen Komponente, die in dem Gas-Flüssigkeits-Separator (10) gespeichert ist; und
das Steuern der Wärmeabgabe durch den Kühler (12) und einer Flussrate des Gases, das von der Pumpe (6) geliefert wird, basierend auf der Temperatur der flüssigen Komponente und der Menge der flüssigen Komponente.

5. Das Steuerverfahren des Anspruchs 4 für das Brennstoffzellensystem, weiter aufweisend:
das Stoppen des Kühlers (12) und das Steuern der Pumpe (6), um das Gas an einer Obergrenzen-Flussrate zu liefern, wenn die Menge der flüssigen Komponente, die in dem Gas-Flüssigkeits-Separator (10) gespeichert ist, größer ist als eine vorgegebene Obergrenzen-Menge und eine detektierte Temperatur der flüssigen Komponente niedriger ist als eine vorgegebene Untergrenzen-Temperatur; und
das Steuern der Wärmeabgabe durch den Kühler (12) in einem Verringerungsmodus und das Steuern einer Flussrate des Gases, das von der Pumpe (6) geliefert wird, in einem Erhöhungsmodus, wenn die Menge der flüssigen Komponente, die in dem Gas-Flüssigkeits-Separator (10) gespeichert ist, größer ist als die vorgegebene Obergrenzen-Menge und die detektierte Temperatur der flüssigen Komponente höher ist als die vorgegebene Untergrenzen-Temperatur, wobei die vorgegebene Obergrenzen-Temperatur als eine Zieltemperatur der flüssigen Komponente festgelegt wird, eine Abweichung zwischen der Zieltemperatur und der detektierten Temperatur berechnet wird und die Steuerung auf der berechneten Abweichung basiert.

6. Das Steuerverfahren des Anspruchs 4 für die Brennstoffzelle, weiter aufweisend:
das Betreiben des Kühlers (12), um eine maximale Wärmeabfuhr zu erzielen, und das Liefern des Gases durch die Pumpe (6) an einer Untergrenzen-Flussrate, wenn die Menge der flüssigen Komponente, die in dem Gas-Flüssigkeits-Separator (10) gespeichert ist, geringer ist als eine vorgegebene Untergrenzen-Menge und die detektierte Temperatur der flüssigen Komponente höher ist als eine vorgegebene Obergrenzen-Temperatur; und
das Steuern der Wärmeabgabe durch den Kühler (12) in einem Erhöhungsmodus und das Steuern einer Menge des Gases, das von der Pumpe (6) geliefert wird, in einem Verringerungsmodus, wenn die Menge der flüssigen Komponente, die in dem Gas-Flüssigkeits-Separator gespeichert ist, geringer ist als die vorgegebene Untergrenzen-Menge und die detektierte Temperatur der flüssigen Komponente geringer ist als eine vorgegebene Obergrenzen-Temperatur, wobei eine vorgegebene Untergrenzen-Temperatur als eine Zieltemperatur der flüssigen Komponente festgelegt wird, eine Abweichung zwischen der Zieltemperatur und der detektierten Temperatur berechnet wird, um basierend auf der berechneten Abweichung zu steuern.

## Revendications

1. Système de pile à combustible comprenant :
une pile à combustible (1) ;
une pompe (6) pour alimenter la pile à combustible (1) en gaz comprenant de l'oxygène ;
un séparateur gaz/liquide (10) pour séparer une composante liquide d'un mélange de fluide gaz/liquide déversé au moins à partir d'un côté cathode (22) de la pile à combustible (1) et pour stocker la composante liquide ;
un refroidisseur (12) pour refroidir la composante liquide stockée dans le séparateur gaz/liquide (10) ;
un détecteur de température (34) pour mesurer une température de la composante liquide stockée dans le séparateur gaz/liquide (10) ;
un détecteur de niveau de liquide (36) pour mesurer une quantité de la composante liquide stockée dans le séparateur gaz/liquide (10) ; et
un régulateur (7) pour contrôler le débit du gaz en provenance de la pompe (6) et contrôler l'évacuation de chaleur par le refroidisseur (12),
où
le régulateur (7) contrôle l'évacuation de chaleur par le refroidisseur (12) et le débit du gaz fourni par la pompe (6) sur la base d'une sortie du détecteur de température (34) et d'une sortie du détecteur de niveau de liquide (36).

2. Système de pile à combustible de la revendication 1,
où
le régulateur (7) :
arrête le refroidisseur (12) et contrôle la pompe (6) de manière à fournir le gaz avec un débit limite supérieur lorsque la quantité de composante liquide stockée dans le séparateur gaz/liquide (10) est supérieure à une quantité limite supérieure prédéterminée et une température détectée de la composante liquide est inférieure à une température limite inférieure prédéterminée ; et
contrôle l'évacuation de chaleur par le refroidisseur (12) en mode décroissant et un débit du gaz fourni par la pompe (6) en mode croissant lorsque la quantité de la composante liquide stockée dans le séparateur gaz/liquide (10) est supérieure à la quantité limite supérieure prédéterminée et la température détectée de la composante liquide est supérieure à la température limite inférieure prédéterminée, la température limite supérieure prédéterminée étant définie comme une température cible de la composante liquide, une déviation entre la température cible et la température détectée étant calculée, le contrôle étant fondé sur la déviation calculée.

3. Système de pile à combustible de la revendication 1,
où
le régulateur (7) :
fait fonctionner le refroidisseur (12) de manière à obtenir une évacuation de chaleur maximale et contrôle la pompe (6) de manière à fournir le gaz avec un débit limite inférieur lorsque la quantité de la composante liquide stockée dans le séparateur gaz/liquide (10) est inférieure à une quantité limite inférieure prédéterminée et une température détectée de la composante liquide est supérieure à une température limite supérieure prédéterminée ; et
contrôle l'évacuation de chaleur par le refroidisseur (12) en mode croissant et contrôle un débit du gaz fourni par la pompe (6) en mode décroissant lorsque la quantité de la composante liquide stockée dans le séparateur gaz/liquide (10) est inférieure à la quantité limite inférieure prédéterminée et la température détectée de la composante liquide est inférieure à la température limite supérieure prédéterminée, la température limite inférieure prédéterminée étant définie comme une température cible de la composante liquide, une déviation entre la température cible et la température détectée étant calculée et le contrôle étant fondé sur la déviation calculée.

4. Méthode de contrôle d'un système de pile à combustible, le système de pile à combustible comprenant une pile à combustible (1), une pompe (6) pour alimenter la pile à combustible (1) en un gaz comprenant de l'oxygène, un séparateur gaz/liquide (10) pour séparer une composante liquide d'un mélange de fluide gaz/liquide déversé au moins à partir d'un côté cathode (22) de la pile à combustible (1), et un refroidisseur (12) pour refroidir la composante liquide stockée dans le séparateur gaz/liquide (10), le système de pile à combustible contrôlant une quantité de la composante liquide stockée dans le séparateur gaz/liquide (10), la méthode de contrôle comprenant :
la mesure d'une température de la composante liquide stockée dans le séparateur gaz/liquide (10) ;
la mesure de la quantité de la composante liquide stockée dans le séparateur gaz/liquide (10) ; et
le contrôle de l'évacuation de chaleur par le refroidisseur (12) et d'un débit du gaz fourni par la pompe (6) sur la base de la température de la composante liquide et de la quantité de la composante liquide.

5. Méthode de contrôle pour le système de pile à combustible de la revendication 4, comprenant en outre :
l'arrêt du refroidisseur (12) et le contrôle de la pompe (6) de manière à fournir le gaz avec un débit limite supérieur lorsque la quantité de composante liquide stockée dans le séparateur gaz/liquide (10) est supérieure à une quantité limite supérieure prédéterminée et une température détectée de la composante liquide est inférieure à une température limite inférieure prédéterminée ; et
le contrôle de l'évacuation de chaleur par le refroidisseur (12) en mode décroissant et le contrôle d'un débit du gaz fourni par la pompe (6) en mode croissant lorsque la quantité de la composante liquide stockée dans le séparateur gaz/liquide (10) est supérieure à la quantité limite supérieure prédéterminée et la température détectée de la composante liquide est supérieure à la température limite inférieure prédéterminée, la température limite supérieure prédéterminée étant définie comme une température cible de la composante liquide, une déviation entre la température cible et la température détectée étant calculée, le contrôle étant fondé sur la déviation calculée.

6. Méthode de contrôle pour le système de pile à combustible de la revendication 4, comprenant en outre :
un fonctionnement du refroidisseur (12) de manière à obtenir une évacuation de chaleur maximale, et un approvisionnement du gaz en provenance de la pompe (6) avec un débit limite inférieur lorsque la quantité de la composante liquide stockée dans le séparateur gaz/liquide (10) est inférieure à une quantité limite inférieure prédéterminée et une température détectée de la composante liquide est supérieure à une température limite supérieure prédéterminée ; et
un contrôle de l'évacuation de chaleur par le refroidisseur (12) en mode croissant et un contrôle d'une quantité du gaz fourni par la pompe (6) en mode décroissant lorsque la quantité de la composante liquide stockée dans le séparateur gaz/liquide (10) est inférieure à la quantité limite inférieure prédéterminée et la température détectée de la composante liquide est inférieure à la température limite supérieure prédéterminée, une température limite inférieure prédéterminée étant définie comme une température cible de la composante liquide, une déviation entre la température cible et la température détectée étant calculée de manière à mettre en oeuvre un contrôle sur la base de la déviation calculée.
